# EUROPEAN PATENT SPECIFICATION

(11) **EP 0 549 297 B1**
(45) Date of publication and mention of the grant of the patent: **02.07.1997**
(21) Application number: 92311642.0
(22) Date of filing: 21.12.1992
(51) Int. Cl.: G11B 5/584, G11B 5/09

(54) **Digital tape reproducing apparatus**
Digitales Bandaufzeichnungs- und Wiedergabegerät
Appareil de reproduction de signaux digitaux à partir d'une bande

(30) Priority: 20.12.1991 JP 355323/91
(43) Date of publication of application: 30.06.1993
(73) Proprietor: SONY CORPORATION, Tokyo (JP)
(72) Inventor: Yoshihiro, Mitsugu, c/o Patents Division, Shinagawa-ku, Tokyo 141 (JP); Iwasaki, Yasuo, c/o Patents Division, Shinagawa-ku, Tokyo 141 (JP)
(74) Representative: Harris, Ian Richard

(56) References cited:
- DE-A- 3 943 218
- US-A- 4 839 755
- US-A- 4 984 104

## Description

This invention relates to recording and reproduction of digital signals, and in particular, though not exclusively, to tracking control systems for video tape recorders (VTRs).

A VTR according to the preamble of claim 1 having a tracking control system is known from US-A-4 839 755.

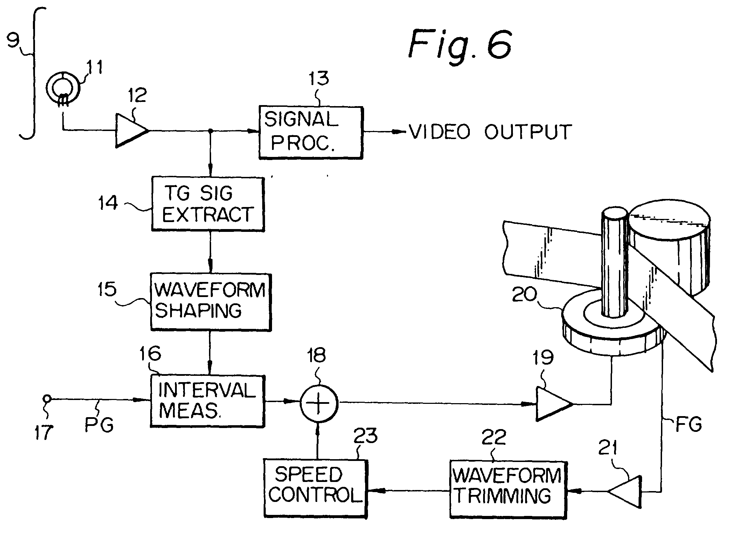

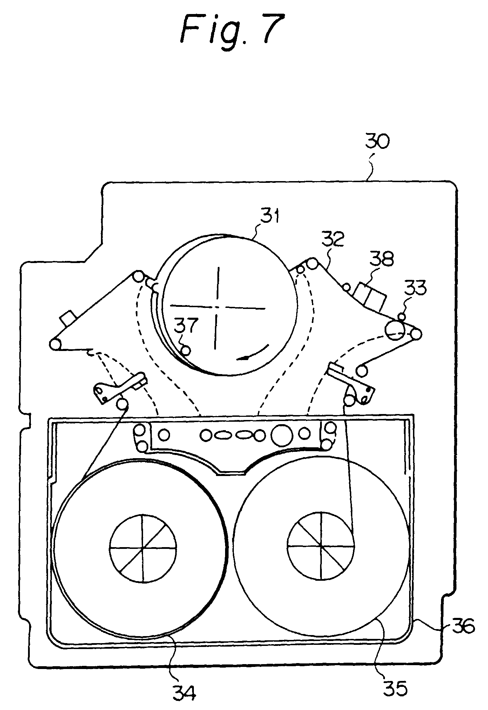

In helical-scan VTRs it is known to record a tracking control signal in a longitudinal track on the magnetic tape. A VTR of this type is semi-schematically shown in Figure 7 of the accompanying drawings in which the reference numeral 30 generally designates the VTR.

The VTR 30 includes a rotary drum 31 about which a magnetic recording tape 32 is helically wrapped. The tape 32 is advanced by a capstan 33, and is supplied from and taken up by reels 34 and 35 respectively of a tape cassette 36. A magnetic recording and reproducing head 37 is mounted on the rotary drum 31 and scans the tape 32 as the tape 32 is advanced. During recording, the magnetic head 37 forms inclined tracks in which the video signals are recorded on the tape 32. During reproduction, the magnetic head 37 scans the previously recorded tracks to reproduce the video signals. A fixed head 38 is used for recording and erasing cue and control signals and the like in a longitudinal track on the tape 32 that is separate from the inclined video signal recording tracks.

Figure 8 of the accompanying drawings shows a signal recording format used in the VTR 30 of Figure 7. In Figure 8, the arrow A indicates the direction in which the tape 32 is advanced. The inclined tracks T are scanned by the magnetic head 37 in a direction indicated by the arrow H. The control signals CTL are recorded by the head 38 in a longitudinal track of the tape 32. Tracking control is performed on the basis of an interval between the time at which a reference signal (not shown) is detected and the time at which the control signal CTL is detected.

The time interval between detection of the reference signal and detection of the control signal CTL is a function of the distance D between the beginning of the track T and the location of the control signal CTL. However, the distance D is subject to variation due to such factors as deterioration of the tape 32 with age, variations in the tension in the tape 32 during recording, and inconsistency in the performance of the tape transport mechanism. Since the known tracking control technique is based on maintaining a constant interval between detection of the reference and control signals, variations in the distance D may result in tracking control errors. A further disadvantage of the known track following system used in the VTR of Figure 7 is the need to provide the fixed head 38.

Another known tracking control technique is referred to as the "ATF" system and is used in the 8mm format VTR. In the ATF system, pilot signals are recorded in the helical tracks. Tracking control is based on the relative strength of cross-talk signals produced from pilot signals in adjacent tracks on either side of a track that is being scanned. In particular, the system adjusts the head scanning locus so as to equalize cross-talk signals received from the respective adjacent tracks. However, variations in the recording and reproducing efficiency of the signal recording and reproducing head may again result in tracking errors.

According to the invention there is provided digital tape reproducing apparatus comprising: a rotary drum for having a magnetic tape helically wrapped therearound; a reproduce head mounted on the drum and which scans the magnetic tape to reproduce digital signals previously recorded on the tape in inclined tracks; means for advancing the magnetic tape relative to the rotary drum; means for detecting a reference signal that represents a phase of rotation of the drum; and a tracking control device comprising means for reproducing/extracting a timing signal that was previously recorded with the digital signals in at least one of the inclined tracks, an interval measuring means for receiving the reference signal that represents a phase of rotation of the rotary drum and the reproduced/extracted timing signal and for measuring an interval between a time when the reference signal is received and a time when the reproduced/extracted timing signal is received, and control means responsive to the interval measuring means for controlling the means for advancing the magnetic tape on the basis of the interval measured by the interval measuring means.

According to an embodiment of the invention there is provided digital tape recording and reproducing apparatus comprising: a rotary drum for having a magnetic tape helically wrapped therearound; means for advancing the magnetic tape relative to said rotary drum; a magnetic recording and reproducing head mounted on said drum for scanning the magnetic tape for recording digital signals on the tape, and reproducing digital signals from the tape, in successive inclined tracks as the tape is advanced; means for detecting a reference signal that represents a phase of rotation of said drum; means responsive to detection of said reference signal for generating a timing signal a predetermined interval of time after detection of said reference signal; means for recording said timing signal on said magnetic tape in at least one of said inclined tracks interspersed with the digital signals recorded in said at least one track; and a tracking control device comprising: means for extracting said timing signal that was previously recorded with said digital signals in said at least one of said inclined tracks; interval measuring means for receiving said reference signal that represents a phase of rotation of said drum and the extracted timing signal and for measuring an interval between a time when said reference signal is received and a time when said extracted timing signal is received; and control means responsive to said interval measuring means for controlling said means for advancing the magnetic tape on the basis of said interval measured by said interval measuring means.

The digital signals may comprise fields of digital video signals, each field of the digital video signals being divided into a plurality of segments each of which is recorded in a respective one of a like plurality of the inclined tracks, the timing signal may be recorded in only one or some of the tracks in each plurality of tracks.

Embodiments of the invention provide a tracking control system that is not subject to the tracking control errors experienced with known systems and that does not require recording of a control signal in a longitudinal tape track by a fixed head.

Tracking control systems embodying the invention are advantageous in that they are not susceptible to factors such as tape condition, variations in tape transport speed or tension and variations in rotary head efficiency which cause errors in prior tracking control systems. Also, as indicated above, no fixed head for recording control signals in a longitudinal tape track is required.

Embodiments of the invention will now be described, by way of example, with reference to the accompanying drawings in which:
Figure 1 is a block diagram of a recording section of a digital VTR in accordance with an embodiment of the invention;
Figures 2A to 2D illustrate recording track formats used in the VTR of Figure 1;
Figures 3 to 5 are signal timing diagrams that illustrate the operation of a tracking control system of embodiments of the invention;
Figure 6 is a block diagram of a reproducing section of a digital VTR in accordance with an embodiment of the invention;
Figure 7 is a semi-schematic plan view of a known VTR; and
Figure 8 shows a recording format used in the known VTR of Figure 7.

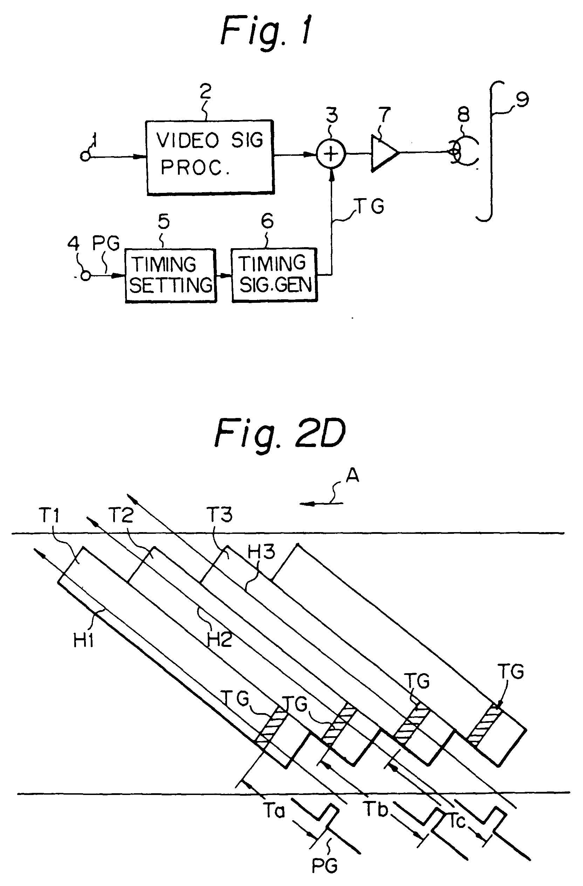

Figure 1 shows a recording section of a digital VTR in which a tracking control system embodying the invention is applied. In Figure 1, an input digital video signal is supplied via an input terminal 1 to a video signal processing circuit 2. A processed digital video signal is supplied by the video signal processing circuit 2 to an input of an adding circuit 3.

As is conventional in VTRs, a PG signal that represents the phase of rotation of the rotary drum (not shown in Figure 1) is generated for the purpose of drum servo control or the like. The PG signal is supplied via an input terminal 4 to a timing setting circuit 5. The timing setting circuit 5 detects the PG signal and, at a predetermined interval of time after detection, generates a trigger signal which is provided to a timing signal generating circuit 6. Upon receiving the trigger signal, the timing signal generating circuit 6 generates a timing signal TG which is supplied to another input of the adding circuit 3. The timing signal TG may be, for example, a sine wave that has a frequency in the range of 100-500 kHz.

The adding circuit 3 adds the timing signal TG to the recording signal received from the video signal processing circuit 2, and outputs the resulting combined signal via an amplifier 7 to a rotary head 8 mounted on the VTR's rotary drum. The rotary head 8 records the combined signal on a magnetic recording tape 9. Since the timing signal TG is a sine wave that is out of the bandwidth of the video signal, the timing signal TG can be frequency-division multiplexed with the video signal.

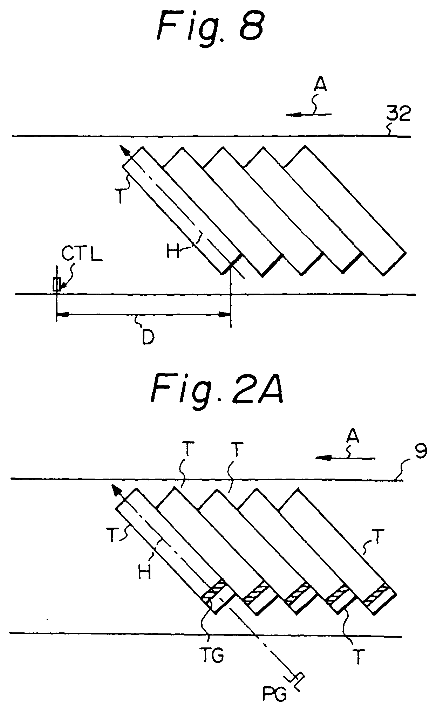

Figure 2A shows in a general manner the recording format used in the recording section of Figure 1. The arrow A shows the direction in which the tape 9 is advanced. The rotary head 8 scans the magnetic tape 9 in the direction indicated by the arrow H to form successive slant tracks T in which the digital video signals are recorded. The timing signal TG is recorded at a position in a track T which is determined by the time interval measured by the timing setting circuit 5 from detection of the PG pulse signal.

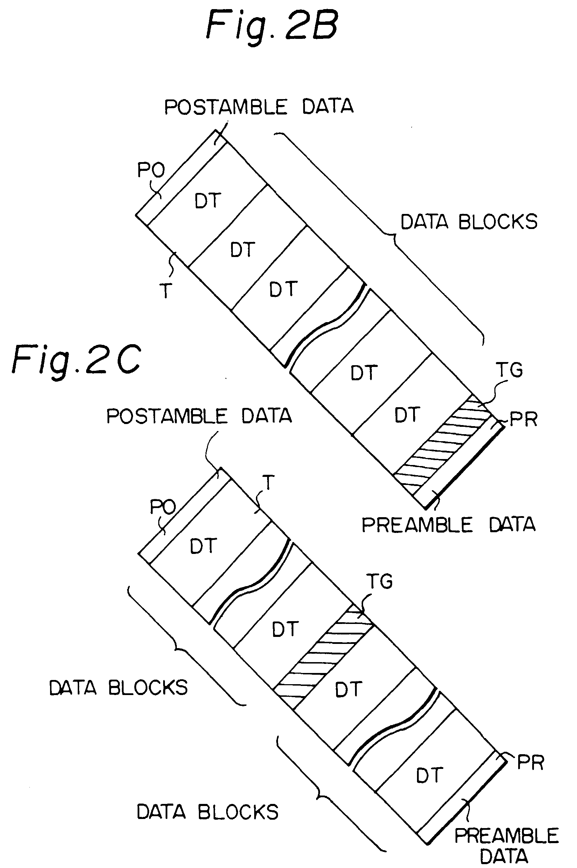

Figure 2B shows in more detail a format of signals recorded in a track T, and Figure 2C shows an alternative signal recording format for the track T. In Figure 2B, signals are recorded in the following sections, proceeding in the direction in which the head scans the tape: a preamble data section PR; timing signal TG; a plurality of data blocks DT in which the digital video signal data, or other digital data, is recorded; and a postamble data section PO. In the alternative track format shown in Figure 2C, the preamble data section PR is followed by a plurality of data blocks DT and then the timing signal TG, which is again followed by a plurality of data blocks DT and then the postamble data section PO. It will be appreciated that the placement of the timing signal TG among data blocks DT as shown in Figure 2C does not create timing problems, since the timing of reproduction of the digital data can be performed without interference from the timing signal TG. In either of the formats of Figures 2B and 2C, the timing signal TG is recorded interspersed with digital signals in the track T, as the preamble data PR and the data blocks DT both comprise digital data.

Figure 6 is a block diagram of the reproducing section of a digital VTR in which tracking control is performed using the timing signals TG that have been recorded on the tape as described with reference to Figures 1 and 2A.

As shown in Figure 6, a rotary head 11 reproduces the signal recorded'on the magnetic tape 9 and supplies the reproduced signal to a signal processing circuit 13 through a reproducing amplifier 12. A processed video signal is output by the processing circuit 13 for display, etc.

The signal output by the reproducing amplifier 12 is also supplied to a timing signal extracting circuit 14. The timing signal extracting circuit 14 includes a bandpass filter (not separately shown) which allows the frequency of the timing signal TG to pass through. The timing signal TG extracted by the timing signal extracting circuit 14 is supplied to a waveform shaping circuit 15. The waveform shaping circuit 15 converts the extracted timing signal TG into a digital pulse train, which, in turn, is supplied to an interval measuring circuit 16. The interval measuring circuit 16 also receives a PG signal provided at an input terminal 17. As before, the PG signal is a reference signal that represents a phase of rotation of the VTR's rotary drum (not shown in Figure 6). The interval measuring circuit 16 detects the PG signal and measures an interval from the detection of that signal until the pulse train representing the timing signal TG is received. The interval measuring circuit 16 then outputs a signal based upon the length of the measured interval to an adding circuit 18. The output of the adding circuit 18 is supplied as a speed control signal to a capstan motor 20 via an amplifier 19. As will be appreciated by those skilled in the art, the capstan motor 20 causes the tape 9 to be driven at a speed determined by the speed of rotation of the capstan motor 20. As is also well known, an FG signal is generated as the capstan motor 20 rotates. The FG signal is supplied to a speed setting circuit 23 via an amplifier 21 and a waveform shaping circuit 22. A signal output by the speed setting circuit 23 is supplied to the adding circuit 18 to provide a servo-control loop for the speed of rotation of the capstan motor 20. It will be understood that the signal provided to the adding circuit 18 by the interval measuring circuit 16 also affects the speed at which the capstan motor 20 is rotated, so that the servo-control system for the capstan motor 20 performs tracking control on the basis of the signal output by the interval measuring means 16.

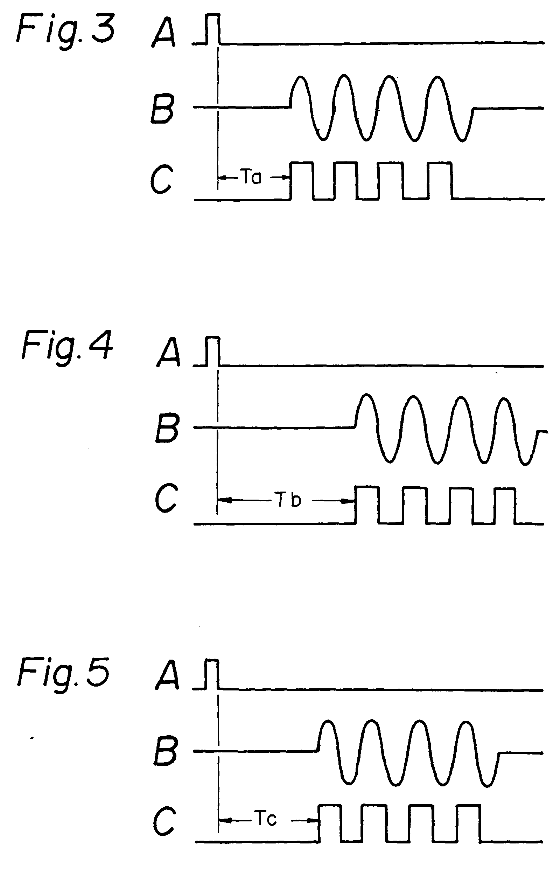

Details of the tracking control operations of the reproducing section of Figure 6 will be described with reference to Figures 2D and 3 to 5. In Figures 3 to 5, each trace A shows the timing of a PG signal received by the interval measuring circuit 16, and the traces B show respective timings of timing signals TG extracted by the TG signal extractor 14. The traces C show digital pulse trains formed by the waveform shaping circuit 15 from respective extracted timing signals TG. The timings shown in Figures 3 to 5 respectively corresponding to head scanning loci H1, H2 and H3 of Figure 2D.

A desired tracking position of the reproducing head 11 is shown by the head scanning locus H3 of Figure 2D. It will be seen that locus H3 longitudinally traverses the track T3 at a position that is at the centre of the track T3 as measured in a direction transverse to the track T3. The time interval between the reference pulse signal PG and the timing signal TG with respect to locus H3 is represented by an interval Tc which is also illustrated in Figure 5.

If the scanning locus of the reproducing head 11 is displaced to the left of centre, as shown by the locus H1 in track T1 of Figure 2D, then the interval between the reference signal PG and the timing signal TG (represented by an interval Ta in Figures 2D and 3) is shorter than the proper interval Tc. On the other hand, if the head scanning locus is displaced to the right of the centre of the track as shown by the locus H2 in the track T2 of Figure 2D, then the interval between the PG signal and the TG signal, represented by an interval Tb in Figures 2D and 4, is longer than the desired interval Tc. Accordingly, the reproducing circuitry shown in Figure 6 adjusts the tape transport speed so that the proper interval Tc is maintained between the reference signal PG and the timing signal TG.

It will be appreciated that the timing at which the reference signal PG is produced is not dependent upon the speed at which the magnetic tape is transported during recording or reproduction, so that factors such as ageing of the tape, variations in tape tension, or inconsistency in the performance of the tape transport system, have no effect on the timing of the reference signal PG. Therefore, the tracking control system as described above does not suffer from tracking errors of the type experienced with the prior tracking control systems mentioned earlier. Further, since no reference signal is recorded in a longitudinal track of the tape, there is no need to provide a fixed head for tracking control purposes.

Although the signal format illustrated in Figures 2A and 2D has a timing signal TG recorded in every track T, it should be noted that the invention can also be used with a format in which a timing signal TG is recorded only in some of the inclined tracks. For example, a tracking control system embodying the invention can be applied with a digital video recording format in which each field of a video signal is divided into several segments and each segment is recorded in a respective inclined track. In such a format the timing signal may be recorded in fewer than all of the tracks, for example in one track for each field.

It should be noted that the invention can be applied to VTRs which have one or more than one magnetic head mounted on the rotary drum, including VTRs in which two or more heads simultaneously scan the magnetic tape. Further, the invention can be applied to helical-scan digital audio recording systems or other non-video digital recording systems.

## Claims

1. Digital tape reproducing apparatus comprising:
a rotary drum for having a magnetic tape (9) helically wrapped therearound, the magnetic tape (9) having digital signals previously recorded thereon in inclined tracks (T) and a timing signal (TG) recorded with said digital signals in at least one of said inclined tracks (T);
a reproduce head (11) mounted on said drum for scanning the magnetic tape (9) for reproducing said digital and timing signals previously recorded on the tape (9) in inclined tracks (T);
means (20) for advancing the magnetic tape (9) relative to said rotary drum;
means (5) for detecting a reference signal (PG) that represents a phase of rotation of said drum;
and a tracking control device;
characterised by
said tracking control device comprising: means (14) for extracting said timing signal (TG) that was previously recorded with said digital signals in said at least one of said inclined tracks; interval measuring means (16, 15) for receiving the reference signal (PG) that represents a phase of rotation of said drum and the extracted timing signal (TG) and for measuring an interval between a time when said reference signal (PG) is received and a time when said extracted timing signal (TG) is received; and control means (18, 23) responsive to said interval measuring means (16, 15) for controlling said means (20) for advancing the magnetic tape (9) on the basis of said interval measured by said interval measuring means (16, 15)

2. Apparatus according to claim 1 for digital tape recording and reproducing, the apparatus comprising:
a magnetic recording and reproducing head mounted on said drum for scanning the magnetic tape (9) for recording digital signals on the tape (9), and reproducing digital signals from the tape (9), in successive inclined tracks (T) as the tape (9) is advanced; and further comprising
means (5, 6) responsive to detection of said reference signal (PG) for generating a timing signal (TG) a predetermined interval of time after detection of said reference signal (PG); and
means for recording said timing signal (TG) on said magnetic tape (9) in at least one of said inclined tracks (T) interspersed with the digital signals recorded in said at least one track.

3. Apparatus according to claim 2, wherein said digital signals comprise fields of digital video signals, each said field of the digital video signals being divided into a plurality of segments each of which is recorded in a respective one of a like plurality of said inclined tracks (T), and wherein said timing signal is recorded in only one or some of the tracks in each said plurality of inclined tracks.

4. Apparatus according to claims 1, 2 or 3, wherein said timing signal (TG) is a sine wave having a frequency in the range of 100 to 500 kHz.

5. Digital tape reproducing apparatus according to claim 1, 2, 3 or 4, wherein said interval measuring means (16, 15) includes a waveform shaping circuit (15) that converts the reproduced timing signal (TG) into a digital pulse train.

6. Digital tape reproducing apparatus according to any preceding claim, wherein said means for advancing the tape comprises a capstan motor (20).

## Patentansprüche

1. Digitale Bandwiedergabevorrichtung, welche umfaßt:
eine drehbare Trommel, um welche ein Magnetband (9) spiralförmig herumwickelt ist, wobei auf dieses vorher digitale Signale in schrägen Spuren (T) aufgezeichnet worden sind und mit den digitalen Signalen ein Synchronisationssignal (TG) auf mindestens einer der schrägen Spuren (T) aufgezeichnet worden ist;
einen Wiedergabekopf (11), welcher auf der Trommel zum Abtasten des Magnetbands (9) zur Wiedergabe der digitalen Signale und der Synchronisationssignale, welche vorher in schrägen Spuren (T) auf das Band (9) aufgezeichnet worden sind, montiert ist;
Mittel (5) zum Weiterbefördern des Magnetbands (9) relativ zu der rotierenden Trommel;
Mittel (20) zur Feststellung eines Referenzsignals (PG), welches eine Rotationsphase der Trommel repräsentiert; und
eine Steuerungseinrichtung zur Spureinstellung;
dadurch gekennzeichnet,
daß die Steuerungseinrichtung zur Spureinstellung umfaßt:
Mittel (14) zum Herausziehen des Synchronisationssignals (TG), welches vorher mit den digitalen Signalen in mindestens einer der schrägen Spuren aufgezeichnet worden ist; eine Intervall-Meßeinrichtung (16, 15) zum Empfang des Referenzsignals (PG), welches eine Rotationsphase der Trommel repräsentiert, und des herausgezogenen Synchronisationssignals (TG) und zur Messung eines Intervalls zwischen einem Zeitpunkt, zu dem das Referenzsignal (PG) empfangen worden ist, und einem Zeitpunkt, zu dem das herausgezogene Synchronisationssignal empfangen worden ist;
und Steuerungsmittel (18, 23), welche auf die Intervall-Meßeinrichtung (16, 15) zur Steuerung der Mittel (20) zur Weiterbeförderung des Magnetbands (9) auf der Grundlage des von der Interval-Meßeinrichtung (16, 15) gemessenen Intervalls ansprechen.

2. Vorrichtung nach Anspruch 1 zur digitalen Bandaufzeichnung und Bandwiedergabe, wobei die Vorrichtung umfaßt:
einen magnetischen Aufzeichnungs- und Wiedergabekopf, welcher auf der Trommel zum Abtasten des Magnetbands (9) zur Aufzeichnung digitaler Signale auf das Band (9) und zur Wiedergabe digitaler Signale von dem Band (9) in aufeinanderfolgenden schrägen Spuren (T), wenn das Band (9) weiterbefördert wird, montiert ist; und welche weiterhin umfaßt:
Mittel (5, 6), welche auf die Detektion des Referenzsignals (PG) zur Erzeugung eines Synchronisationssignals (TG) ein vorgegebenes Zeitintervall nach Detektion des Referenzsignals (PG) ansprechen; und
Mittel zur Aufzeichnung des Synchronisationssignals (TG) auf das Magnetband (9) in mindestens einer der schrägen Spuren (T), durchsetzt mit den digitalen Signalen, welche in mindestens einer Spur aufgezeichnet sind.

3. Vorrichtung nach Anspruch 2, bei welcher die digitalen Signale Felder von digitalen Videosignalen aufweisen, wobei jedes Feld der digitalen Videosignale in eine Vielzahl von Segmenten aufgeteilt ist, von denen jeweils jedes in jeweils einer einer Vielzahl von schrägen Spuren (T) aufgezeichnet ist, und bei welcher das Synchronisationssignal nur in einer oder einigen der Spuren in jeder Vielzahl von schrägen Spuren aufgezeichnet ist.

4. Vorrichtung nach Anspruch 1, 2 oder 3, bei welcher das Synchronisationssignal (TG) eine Sinuswelle mit einer Frequenz im Bereich von 100 bis 500 kHz ist.

5. Digitale Bandwiedergabevorrichtung nach Anspruch 1, 2, 3 oder 4, bei welcher die Intervall-Meßeinrichtung (16, 15) eine Wellenform-Umformungsschaltung (15) enthält, welche das wiedergegebene Synchronisationssignal (TG) in einen digitalen Impulszug umsetzt.

6. Digitale Bandwiedergabevorrichtung nach einem der vorhergehenden Ansprüche, bei welcher die Mittel zur Weiterbeförderung des Bands einen Capstan-Motor (20) aufweisen.

## Revendications

1. Appareil de reproduction de signaux à partir d'une bande numérique comprenant :
un tambour tournant pour avoir une bande magnétique (9) enroulée hélicoïdalement autour de celui-ci, la bande magnétique (9) ayant des signaux numériques préalablement enregistrés sur celle-ci dans des pistes inclinées (T) et un signal de synchronisation (TG) enregistré avec lesdits signaux numériques dans au moins une desdites pistes inclinées (T) ;
une tête de reproduction (11) montée sur ledit tambour pour balayer la bande magnétique (9) pour reproduire lesdits signaux de synchronisation numériques enregistrés préalablement sur la bande (9) dans des pistes inclinées (T) ;
un moyen (20) pour avancer la bande magnétique (9) par rapport audit tambour tournant ;
un moyen (5) pour détecter un signal de référence (PG) qui représente une phase de rotation dudit tambour ; et un dispositif de commande de suivi de piste ;
caractérisé par
ledit dispositif de commande de suivi de piste comprenant : un moyen (14) pour extraire ledit signal de synchronisation (TG) qui était préalablement enregistré avec lesdits signaux numériques dans ladite au moins une desdites pistes inclinées ; un moyen de mesure d'intervalle (16, 15) pour recevoir le signal de référence (PG) qui représente une phase de rotation dudit tambour et le signal de synchronisation extrait (TG) et pour mesurer un intervalle entre un temps lorsque ledit signal de référence (PG) est reçu et un temps lorsque ledit signal de synchronisation extrait (TG) est reçu ; et un moyen de commande (18, 23) sensible audit moyen de mesure d'intervalle (16, 15) pour commander ledit moyen (20) pour avancer la bande magnétique (9) sur la base dudit intervalle mesuré par ledit moyen de mesure d'intervalle (16, 15).

2. Appareil selon la revendication 1 pour enregistrer et reproduire une bande numérique, ledit appareil comprenant :
une tête d'enregistrement et de reproduction magnétique montée sur ledit tambour pour balayer la bande magnétique (9) pour enregistrer des signaux numériques sur la bande (9), et reproduire des signaux numériques à partir de la bande (9), dans des pistes inclinées successives (T) lorsque la bande (9) avance ; et comprenant de plus :
un moyen (5, 6) sensible à une détection dudit signal de référence (PG) pour générer un signal de synchronisation (TG) à un intervalle de temps prédéterminé après détection dudit signal de référence (PG) ; et
un moyen pour enregistrer ledit signal de synchronisation (TG) sur ladite bande magnétique (9) dans au moins une desdites pistes inclinées (T) entremêlée avec des signaux numériques enregistrés dans ladite au moins une piste.

3. Appareil selon la revendication 2, dans lequel lesdits signaux numériques comprennent des champs des signaux vidéo numériques, chacun desdits champs de signaux vidéo numériques étant divisés en une pluralité de segments dont chacun est enregistré dans une pluralité respective de ce qui ressemble à une pluralité desdites pistes inclinées (T), et dans lequel ledit signal de synchronisation n'est enregistré que dans une ou plusieurs des pistes dans chacune de ladite pluralité de pistes inclinées.

4. Appareil selon la revendication 1, 2 ou 3, dans lequel ledit signal de synchronisation (TG) est une onde sinusoïdale ayant une fréquence dans l'intervalle de 100 à 500 kHz.

5. Appareil de reproduction de signaux numériques à partir d'une bande selon la revendication 1, 2, 3 ou 4, dans lequel ledit moyen de mesure d'intervalle (16, 15) comprend un circuit de mise en forme de forme d'ondes (15) qui convertit le signal de synchronisation reproduit (TG) en un train d'impulsion numérique.

6. Appareil de reproduction de signaux numériques à partir d'une bande selon l'une quelconque des revendications précédentes, dans lequel ledit moyen pour avancer la bande comprend un moteur de cabestan (20).
